# EUROPÄISCHE PATENTSCHRIFT

(11) **EP 3 057 751 B1**
(45) Veröffentlichungstag und Bekanntmachung des Hinweises auf die Patenterteilung: **20.12.2017**
(21) Anmeldenummer: 14781869.4
(22) Anmeldetag: 07.10.2014
(51) Int. Cl.: B29B 17/02, B29B 17/04, D21B 1/14, B02C 7/06, D21D 1/30

(54) **VORRICHTUNG UND VERFAHREN ZUM REINIGEN VON KUNSTSTOFF IM ZUGE VON KUNSTSTOFFRECYCLING**
DEVICE AND METHOD FOR CLEANING PLASTIC IN THE COURSE OF PLASTIC RECYCLING
DISPOSITIF ET PROCÉDÉ DE NETTOYAGE DE MATIÈRES PLASTIQUES DANS LE CADRE DE LEUR RECYCLAGE

(30) Priorität: 15.10.2013 DE 102013111365
(43) Veröffentlichungstag der Anmeldung: 24.08.2016
(73) Patentinhaber: CVP Clean Value Plastics GmbH, 20099 Hamburg (DE)
(72) Erfinder: GERCKE, Alexander, 23843 Bad Oldesloe (DE); WERMTER, Carsten, Hamburg 20149 (DE); HOFMANN, Michael, Hamburg 20146 (DE)
(74) Vertreter: Hauck Patentanwaltspartnerschaft mbB
(86) Internationale Anmeldenummer: PCT/EP2014/071444
(87) Internationale Veröffentlichungsnummer: WO 2015/055466

(56) Entgegenhaltungen:
- US-A- 4 878 997
- US-A1- 2008 191 069
- US-A1- 2013 048 766
- US-B2- 7 648 090

## Beschreibung

Die Erfindung betrifft eine Vorrichtung zum Reinigen von Kunststoff, insbesondere von Kunststoffschnipseln, im Zuge von Kunststoffrecycling, umfassend einen Refiner mit zwei einander zugewandten Refinerwerkzeugen, von denen mindestens eines drehend angetrieben ist, und die zwischen sich einen Arbeitsspalt zum Abreiben von Zellstoff und anderen anhaftenden Stoffen von dem Kunststoff begrenzen, wobei der Refiner einen in den Arbeitsspalt mündenden Einlass aufweist, weiter umfassend eine mit dem Einlass verbundene Eintragseinrichtung zum Eintragen des zu reinigenden Kunststoffs in den Einlass, und wobei der Refiner einen ebenfalls mit dem Arbeitsspalt verbundenen Auslass aufweist, durch den der in dem Arbeitsspalt gereinigte Kunststoff zusammen mit den abgeriebenen Zellstoffen und anderen anhaftenden Stoffen zu einem Ausgang abgeführt wird.

Weiterhin betrifft die Erfindung ein Verfahren zum Reinigen von Kunststoff, insbesondere von Kunststoffschnipseln, im Zuge von Kunststoffrecycling in einem Refiner mit zwei einander zugewandten Refinerwerkzeugen, von denen mindestens eines drehend angetrieben wird, und die zwischen sich einen Arbeitsspalt begrenzen, wobei der zu reinigende Kunststoff in den Arbeitsspalt eingetragen wird, in dem Arbeitsspalt Zellstoff und andere anhaftende Stoffe von dem Kunststoff abgerieben werden, und der gereinigte Kunststoff zusammen mit den abgeriebenen Zellstoffen und anderen anhaftenden Stoffen anschließend über einen Auslass aus dem Arbeitsspalt zu einem Ausgang abgeführt wird

In Refinern, beispielsweise Scheibenrefinern, werden beispielsweise Kunststoffschnipsel, sogenannte Flakes, unter Zugabe von Wasser von Zellstoff und anderen anhaftenden Stoffen gereinigt, insbesondere durch Friktion zwischen den einander zugewandten Refinerscheiben. Dem Scheibenrefiner schließt sich oftmals eine Trenneinrichtung an, in der die Kunststoffschnipsel von den abgeriebenen Verunreinigungen getrennt werden. Dabei ist die Konsistenz der in dem Scheibenrefiner bearbeiteten Suspension aus Wasser und zu reinigendem Kunststoff ein wichtiger Parameter. In der Papierindustrie werden Scheibenrefiner üblicherweise niederkonsistent betrieben, das heißt der Feststoffgehalt in der Suspension liegt in der Regel unter 3 Gew. %. Ein Grund ist die mangelnde Pumpfähigkeit von Suspensionen mit Konsistenzen von mehr als 3 Gew. %, insbesondere bei Zellstoffen oder Faserstoffen. Lediglich bei atmosphärisch betriebenen Scheibenrefinern mit Pumpensumpf ist unter sehr engen Voraussetzungen ein höher konsistenter Betrieb möglich oder es wird auf einen Druckbetrieb mit Wasserdampf ausgewichen. Bei Kunststoff-Folienschnipseln zeigen sich neben den erläuterten Problemen beim Pumpen zusätzlich Aufschwimm- bzw. Absinkprobleme. Insbesondere Kunststofffolien neigen aufgrund ihrer geringen Dichte und des bevorzugten Kunststoffs PE-LD stark zum Aufschwimmen, so dass ein atmosphärischer Betrieb des Scheibenrefiners über einen üblichen Pumpensumpf praktisch bzw. wirtschaftlich nicht mehr möglich ist.

Bei einem hydrodynamischen Niederkonsistenzbetrieb kann als Alternative zum atmosphärischen Hochkonsistenzbetrieb zwar auf einen groß bauenden Pumpensumpf verzichtet werden. Auch die weiteren oben erläuterten Probleme des atmosphärischen Betriebs werden vermieden. Allerdings ist die Friktion im Arbeitsspalt und damit die Reinigungswirkung bei einer niedrigen Konsistenz der Suspension geringer. Ein weiteres wichtiges Kriterium für den Betrieb ist der Energieverbrauch. Der Energieverbrauch wird maßgeblich durch die Konsistenz der Suspension im Arbeitsspalt des Scheibenrefiners bestimmt. Bei Eintritt in den Arbeitsspalt erfährt die Wasser-Feststoffsuspension eine hohe Beschleunigung, die viel Energie erfordert. Je größer die Wassermenge ist, die zwischen den Arbeitsscheiben beschleunigt werden muss, desto größer ist der Energiebedarf des Reinigungsverfahrens. Der Energieverbrauch ist von einer Vielzahl von Parametern abhängig, wie Scheibenabstand, Scheibengeometrie, Wasservolumen und Feststoffkonsistenz. Bei Materialien mit einer geringen Schüttdichte, wie beispielsweise Kunststofffolien (Schüttdichte 40 - 100 kg/m³ oder geringer) und einem entsprechend großen Volumen ist die Förderfähigkeit bzw. Pumpfähigkeit der Suspension das entscheidende Kriterium dafür, wie hoch die Feststoffkonsistenz sein kann. Beispielsweise bei Kunststofffolienschnipseln mit einer Größe von 40 mm x 40mm und einer Schüttdichte von ca. 60 kg/m³ ist eine Feststoffkonsistenz der Suspension im Arbeitsspalt von maximal 2 - 2,5 Gew. % möglich, damit die Suspension pumpfähig bleibt. Hiermit ist ein sehr hoher Wasseranteil verbunden, der für die Reinigung der Folienschnipsel gar nicht erforderlich ist, jedoch zu einem stark erhöhten Energieverbrauch führt.

US 2008/0191069 A1 beschreibt ein Verfahren sowie eine Vorrichtung zur Reinigung von Kunststoff mittels eines Refiners, der über zwei einander zugewandte Refinerscheiben verfügt.

US 4,878,997A beschreibt ein Verfahren sowie eine Vorrichtung zur Herstellung von Faserstoff, wobei Ausgangsmaterial über eine Förderschnecke zu zwei Refinerscheiben geführt und dort zerfasert wird. Das zerfaserte Material wird mittels einer Kreiselpumpe unter Zuführung von Wasser aus dem Refiner abgeführt.

Weitere derartige Vorrichtungen sind bekannt aus US 2013/0048766 A1 und US 7 648 090 B2.

Ausgehend von dem erläuterten Stand der Technik liegt der Erfindung die Aufgabe zugrunde, eine Vorrichtung und ein Verfahren der eingangs genannten Art bereitzustellen, mit denen in baulich einfacher Weise eine energieeffiziente und hochwirksame Reinigung von Kunststoff erreicht wird.

Die Erfindung löst die Aufgabe durch die Gegenstände der Ansprüche 1 und 7. Vorteilhafte Ausgestaltungen finden sich in den abhängigen Ansprüchen, der Beschreibung und den Figuren.

Für eine Vorrichtung der eingangs genannten Art löst die Erfindung die Aufgabe dadurch, dass der Auslass ein mit dem Arbeitsspalt verbundenes und zu dem Ausgang führendes Auslassrohr umfasst, wobei das Auslassrohr mit einer Wasserpumpe zum Pumpen von Wasser durch das Auslassrohr verbunden ist, wobei im Betrieb das mittels der Wasserpumpe durch das Auslassrohr gepumpte Wasser als seitlich an dem Arbeitsspalt vorbeiströmender und zu dem Arbeitsspalt tangentialer Wasserstrahl ausgebildet ist und einen Unterdruck erzeugt, der eine Sogwirkung auf den Arbeitsspalt ausübt derart, dass gereinigter Kunststoff aus dem Arbeitsspalt in das Auslassrohr gefördert wird, und wobei das mittels der Wasserpumpe durch das Auslassrohr gepumpte Wasser in dem Auslassrohr befindlichen Kunststoff zu dem Ausgang fördert.

Für ein Verfahren der eingangs genannten Art löst die Erfindung die Aufgabe dadurch, dass mittels einer Wasserpumpe Wasser durch ein mit dem Arbeitsspalt verbundenes und zu dem Ausgang führendes Auslassrohr gepumpt wird, wobei das durch das Auslassrohr gepumpte Wasser eine Sogwirkung auf den Arbeitsspalt ausübt derart, dass gereinigter Kunststoff aus dem Arbeitsspalt in das Auslassrohr gefördert wird und mit dem durch das Auslassrohr gepumpten Wasser zu dem Ausgang gefördert wird.

Bei dem erfindungsgemäß zu reinigenden Kunststoff handelt es sich insbesondere um zu recycelnden Abfallkunststoff. Es kann sich insbesondere um vorzerkleinerte Kunststoffschnipsel, sogenannte Kunststoffflakes, handeln. Bei den Kunststoffschnipseln kann es sich wiederum um Kunststofffolienschnipsel handeln. Der zu reinigende Kunststoff wird durch die Eintragseinrichtung über den Einlass in den Arbeitsspalt des Scheibenrefiners gefördert. Der Kunststoff kann durch die Eintragseinrichtung dem Arbeitsspalt zusammen mit Wasser zugeführt werden. Es ist aber beispielsweise auch eine trockene Zuführung des Kunststoffs möglich, wenn beispielsweise eine Förderschnecke der Eintragseinrichtung als Kern ein Hohlrohr besitzt, durch das Wasser zur Einstellung der Reinigungskonsistenz im Arbeitsspalt eingebracht wird. Die Eintragskonsistenz vor Erreichen des Arbeitsspalts würde in diesem Fall 100% Feststoff betragen. Auch ist eine Zuführung mit (Wasser-)Dampf möglich, insbesondere im Fall eines dampfgetriebenen Druckrefiners. Der Arbeitsspalt wird begrenzt durch die einander zugewandten Arbeitsflächen der Refinerwerkzeuge. Auf den Arbeitsflächen sind geeignete Friktionselemente angeordnet. Mindestens eines der Refinerwerkzeuge wird drehend angetrieben (Rotor). Das andere Refinerwerkzeug kann ebenfalls drehend angetrieben werden oder es kann fest stehen (Stator). Beispielsweise im Falle eines Scheibenrefiners, bei dem die Refinerwerkzeuge Refinerscheiben sind, können die einander zugewandten Arbeitsflächen der Refinerscheiben kreisförmig bzw. kreisringförmig ausgestaltet sein. Entsprechend ist dann ein in der Draufsicht kreisförmiger bzw. kreisringförmiger Arbeitsspalt gebildet. Die in den Arbeitsspalt eingebrachte Suspension aus zu reinigendem Kunststoff und Wasser wird durch die Drehung des mindestens einen Refinerwerkzeugs rotativ beschleunigt und Verunreinigungen, wie Zellstoff oder andere anhaftende Stoffe, werden von dem Kunststoff abgerieben. Durch die rotative Beschleunigung der Suspension wird der Kunststoff in dem Arbeitsspalt gemeinsam mit den abgeriebenen Verunreinigungen und dem Wasser zu einem Auslass des Refiners transportiert. Der Auslass umfasst eine insbesondere seitlich mit dem Arbeitsspalt kommunizierende Auslassöffnung, mit der ein insbesondere zumindest abschnittsweise tangential, insbesondere vollständig tangential, zu dem Arbeitsspalt verlaufendes Auslassrohr verbunden ist. Das Auslassrohr kann sich insbesondere in tangentialer Richtung an die seitliche Auslassöffnung des Arbeitsspalts anschließen. Über das Auslassrohr wird der gereinigte Kunststoff zusammen mit den abgeriebenen Verunreinigungen und dem Wasser zu dem Ausgang befördert. Der Ausgang kann mit einer Trenneinrichtung verbunden sein, in der der gereinigte Kunststoff von den abgeriebenen Verunreinigungen getrennt wird. Die Trenneinrichtung kann in an sich bekannter Weise ausgestaltet sein. Beispielsweise kann es sich um eine Schwimm-Sink-Trenneinrichtung, eine Siebtrenneinrichtung, beispielsweise mit Siebkorb, oder dergleichen handeln. Der Ausgang kann aber auch zum Beispiel zu einem weiteren Refiner einer weiteren Reinigungsstufe führen.

Das Auslassrohr ist erfindungsgemäß weiterhin mit einer Wasserpumpe verbunden, die zusätzliches Wasser durch das Auslassrohr in Richtung des Ausgangs pumpt. Der durch das Auslassrohr gepumpte und insbesondere gerichtete Wasserstrahl strömt durch das Auslassrohr tangential an dem Arbeitsspalt, insbesondere der seitlichen Auslassöffnung des Arbeitsspalts, vorbei. Das Wasser wird von der Wasserpumpe über eine Wassereinlassöffnung in das Auslassrohr gefördert. Die Wassereinlassöffnung kann auf der dem Ausgang abgewandten Seite des Auslassrohrs angeordnet sein. Durch den erfindungsgemäß erzeugten, seitlich an dem Arbeitsspalt vorbeiströmenden und zu dem Arbeitsspalt tangentialen Wasserstrahl werden zwei wichtige Funktionen erfüllt. Einerseits transportiert der Wasserstrahl die aus dem Arbeitsspalt in das Auslassrohr geförderte Suspension zu dem Ausgang. Dabei kann zumindest ein Teil der Suspension bereits aufgrund von Fliehkraft aus dem Arbeitsspalt in das Auslassrohr befördert werden. Darüber hinaus erzeugt der gerichtete Wasserstrahl jedoch eine Sogwirkung in dem Arbeitsspalt, die den Transport der Suspension aus dem Arbeitsspalt in das Auslassrohr zumindest verstärkt. Die in dem Auslassrohr befindliche Suspension wird gemeinsam mit dem gerichteten Wasserstrahl zu dem Ausgang befördert. Die erfindungsgemäß vorgesehene Wasserpumpe wirkt also nach dem Prinzip einer Strahlpumpe bzw. Wasserstrahlpumpe. Ähnlich wie bei einer Venturi-Düse wird ein Unterdruck erzeugt, der die in dem Arbeitsspalt befindliche Suspension in das Auslassrohr saugt. Somit wird das tangentiale selbsttätige Abfördern des gereinigten Kunststoffs aus dem Arbeitsspalt unterstützt.

Eine andere wichtige Funktion der erfindungsgemäß vorgesehenen Wasserpumpenanordnung ist die Möglichkeit, die Austragskonsistenz unabhängig von der Reinigungskonsistenz einstellen zu können. Die Reinigungskonsistenz beschreibt das Verhältnis von Feststoff zu Wasser im Arbeitsspalt. Die Austragskonsistenz beschreibt entsprechend das Verhältnis von Feststoff zu Wasser im Auslass aus dem Arbeitsspalt. Entsprechend beschreibt die Eintragskonsistenz das Verhältnis von Feststoff zu Wasser am Einlass des Arbeitsspalts, insbesondere in der Eintragseinrichtung. Durch die Möglichkeit, die Austragskonsistenz unabhängig von der Reinigungskonsistenz einstellen zu können, wird der eingangs erläuterte Zielkonflikt aufgelöst. Im Sinne einer maximalen Energieeffizienz und Reinigungswirkung ist es erfindungsgemäß möglich, im Arbeitsspalt eine hohe Feststoffkonsistenz einzustellen und gleichzeitig dem Arbeitsspalt nachfolgend eine gut förder- bzw. pumpfähige Suspension mit niedriger Feststoffkonsistenz einzustellen. Dies ist erfindungsgemäß in baulich besonders einfacher und kompakter Weise möglich. Dabei kann flexibel die jeweils beste Konsistenzeinstellung für die bearbeiteten Rohstoffe gewählt werden, beispielsweise für voluminöse Rohstoffe mit geringem Schüttgewicht, wie Kunststofffolienschnipsel. Auch kann die Abspülleistung der über Friktion abgeriebenen Verunreinigungen verbessert werden und es wird eine besonders homogene gut förderbare Suspension im Auslass erzeugt. Indem der erfindungsgemäß an dem Arbeitsspalt vorbeigeführte Wasserstrahl nicht in den Arbeitsspalt eintritt, wird die Reinigungskonsistenz nicht unerwünscht beeinflusst. Ein Pumpensumpf bzw. eine Feststoffpumpe zum Abfördern der Suspension ist erfindungsgemäß nicht erforderlich. Dadurch wird eine besonders kompakte Bauweise erreicht.

Das Auslassrohr kann nach einer Ausgestaltung in Richtung von dem Arbeitsspalt zu dem Ausgang in seinem Querschnitt erweitert sein. Es bildet also einen Diffusor und verbessert die Abförderung des gereinigten Kunststoffs.

Nach einer weiteren Ausgestaltung kann in oder an dem Auslassrohr eine Düse angeordnet sein, oder das Auslassrohr selbst kann als Düse wirken, wobei die Düsenwirkung jeweils einen gerichteten Wasserstrahl in dem Auslassrohr erzeugt, insbesondere in Tangentialrichtung zu dem Arbeitsspalt. An einem mit der Wasserpumpe verbundenen Ende des Auslassrohrs kann ein als Düse wirkendes Düsenrohr in das Auslassrohr eingesetzt sein. Das Düsenrohr kann in Längsrichtung verschiebbar in dem Auslassrohr angeordnet sein und/oder das Düsenrohr kann kippbar in dem Auslassrohr angeordnet sein. Weiterhin kann das Düsenrohr lösbar in oder an dem Auslassrohr befestigt sein. Durch das Vorsehen einer geeigneten Düse wird in besonders einfacher Weise ein gerichteter Wasserstrahl in dem Auslassrohr erzeugt. Dies verbessert die Abförderung und die Sogwirkung und es wird sicher verhindert, dass Wasser unerwünscht in den Arbeitsspalt eingestrahlt wird. Für das Ausbilden eines ausreichend gerichteten Wasserstrahls kann es erforderlich sein, dass die Düse in das Auslassrohr hineinragt. Es kommt dann allerdings in Kontakt mit dem gereinigten Kunststoff und den abgeriebenen Verunreinigungen, so dass es beispielsweise bei abrasiven Kunststoffen wie PET zu einem Verschleiß der Düse kommt. In einem solchen Fall ist es günstig, wenn das Düsenrohr lösbar in oder an dem Auslassrohr befestigt ist, da es dann in einfacher Weise ausgetauscht werden kann. Sofern das Düsenrohr beweglich ist, beispielsweise in Längsrichtung verschiebbar und/oder in seiner Längsrichtung unter einem veränderlichen Winkel gegenüber der Längsrichtung des Auslassrohrs einstellbar ist, kann der gerichtete Wasserstrahl gezielt gesteuert werden. Auch ist es denkbar, dass das Düsenrohr eine veränderbare Düsenöffnung besitzt, so dass die Austrittsgeschwindigkeit und/oder der Strahlkegel des aus dem Düsenrohr austretenden Wasserstrahls eingestellt werden kann.

Bei dem Refiner kann es sich um einen Scheibenrefiner, insbesondere einen Zahnscheibenrefiner handeln. Die Refinerwerkzeuge werden dann durch Refinerscheiben gebildet. Auf den einander gegenüberliegenden und den Arbeitsspalt begrenzenden Arbeitsflächen sind dann in an sich bekannter Weise Zähne angeordnet, die durch Friktion Zellstoffe und andere anhaftende Stoffe von dem zu reinigenden Kunststoff entfernen. Der Einlass kann dann in Axialrichtung der Refinerscheiben in den Arbeitsspalt münden. Er kann zum Beispiel zentral in Axialrichtung der Arbeitsscheiben, die in der Regel gleichzeitig die Drehachse der mindestens einen drehend angetriebenen Refinerscheibe bildet, in den Arbeitsspalt münden und dort die Suspension aus zu reinigendem Kunststoff und Wasser eintragen. Bei dem Refiner kann es sich aber auch um einen Kegelrefiner oder einen Trommelrefiner handeln.

In besonders praxisgemäßer Weise kann die Eintragseinrichtung eine Förderschnecke umfassen. Mit Förderschnecken können auch hochkonsistente Suspensionen sicher und effektiv gefördert werden.

Die Eintragseinrichtung kann weiterhin eine Wasserzuführeinrichtung umfassen, durch die Wasser direkt in die Eintragseinrichtung zugeführt werden kann. Es kann also zum Beispiel Wasser direkt in den Schneckengang einer Förderschnecke eingedüst werden. Das Wasser kann aber auch zum Beispiel kurz vor dem Schneckengang einer Förderschnecke eingedüst werden. Durch diese Ausgestaltung ist die Eintragskonsistenz vor Eintritt in den Arbeitsspalt einstellbar. Es ist somit eine gezielte Vorbenetzung des zu reinigenden Kunststoffs mit Wasser auch im hochkonsistenten Feststoffeintrag über Schneckenförderer möglich, ohne dass ein Agitator mit einem Pumpeneintrag, beispielsweise eine Bütte mit einem Rühragitator, erforderlich ist. Auch denkbar ist ein Mischeintrag, bei dem ein Stoffabschlag aus einer Feststoffpumpe erfolgt und dann über eine Förderschnecke in den Einlass eingetragen wird. Weiterhin denkbar sind Eintragseinrichtungen mit Spezialpumpen für den Hochkonsistenzbetrieb.

Nach einer weiteren Ausgestaltung kann dem Arbeitsspalt des Refiners einer Wasserzuführeinrichtung zugeordnet sein, durch die Wasser direkt in den Arbeitsspalt des Refiners zugeführt werden kann. Dazu können ein oder mehrere Wassereinlässe, beispielsweise Düsen, in einem der Refinerwerkzeuge, beispielsweise dem nicht gedrehten Stator, vorgesehen sein. Es kann auf diese Weise unabhängig von der Eintragskonsistenz die Reinigungskonsistenz in dem Arbeitsspalt verringert werden. Der Stofftransport kann durch eine Verbesserung des Fließverhaltens im Arbeitsspalt unterstützt werden. Dies wiederum ermöglicht auch komplexer ausgestaltete Arbeitsflächen der Refinerwerkzeuge. Durch gezielte Zugabe von Wasser in den Arbeitsspalt an bestimmten Positionen kann der Stofftransport derart verbessert werden, dass durch komplexere Arbeitsflächengeometrien eine Vergrößerung der Oberflächen der den Arbeitsspalt begrenzenden Arbeitsflächen erreicht wird. Dies wiederum führt zu einer effizienteren Reinigungswirkung und einem höheren Durchsatz. Durch gezielte Wassereindüsung beispielsweise über den Stator des Refiners kann auch der Stofffluss über die Friktionsflächen der Refinerwerkzeuge begünstigt werden und/oder umgekehrt der Stoffabfluss in den zum Abtransport vorgesehenen Kanälen der Arbeitsflächen.

Wie bereits erläutert, ist es möglich, dass neben der Wasserpumpe keine weitere Pumpe, insbesondere Feststoffpumpe, zum Fördern des Kunststoffs bzw. der Suspension, vorgesehen ist. Entsprechend ist es möglich, dass die Vorrichtung keinen Pumpensumpf aufweist. Es ist also ein hydrodynamischer Betrieb möglich. Durch den Verzicht auf einen Pumpensumpf ist auch kein groß bauendes Fundament für einen solchen Pumpensumpf erforderlich. Die Anlage baut kompakter und es sind sogar mobile Vorrichtungen denkbar. Außerdem ist eine Vorrichtung im hydrodynamischen Betrieb weniger verschleißanfällig und besitzt eine höhere Verfügbarkeit, da keine Feststoffpumpe vorgesehen werden muss. Der Materialtransport wird vereinfacht.

Die erfindungsgemäß ermöglichte gezielte Einflussnahme auf die Eintragskonsistenz, die Reinigungskonsistenz und die Austragskonsistenz durch ggf. individuelle Wassereindüsung in den entsprechenden Teilen der Vorrichtung ermöglich außerdem eine gezielte Temperatursteuerung. So kann das durch das Auslassrohr gepumpte Wasser und das dem Kunststoff im Zuge des Eintrags in den Arbeitsspalt und vor Eintritt in den Arbeitsspalt direkt zugeführte Wasser, Wasser unterschiedlicher Temperatur sein. Auch ist es möglich, dass das dem Arbeitsspalt des Refiners während des Reinigens des Kunststoffs in dem Arbeitsspalt direkt zugeführte Wasser und das durch das Auslassrohr gepumpte Wasser, Wasser unterschiedlicher Temperatur ist. Weiterhin ist es möglich, dass das dem Kunststoff im Zuge des Eintrags in den Arbeitsspalt und vor der Eintritt in den Arbeitsspalt direkt zugeführte Wasser und das dem Arbeitsspalt des Refiners während des Reinigens des Kunststoffs in dem Arbeitsspalt direkt zugeführte Wasser, Wasser unterschiedlicher Temperatur ist. Es ist also beispielsweise möglich, an allen drei Wassereinlässen zum Einstellen der Eintragskonsistenz, der Reinigungskonsistenz und der Austragskonsistenz Wasser unterschiedlicher Temperaturen einzubringen. Natürlich ist es auch möglich, dass beispielsweise an zwei der Einlässe Wasser gleicher Temperatur eingebracht wird und nur an einem der drei Einlässe Wasser einer anderen Temperatur. Ein Anwendungsfall ist eine gezielte Kaltwasserzugabe im Arbeitsspalt und/oder im Auslassrohr. Auf diese Weise können Kolloidbildungen verringert werden, so genannte Hotmelts (Etikettenkleber) können besser abgelöst werden und die Flotierbarkeit wird verbessert. Auch denkbar ist beispielsweise ein Vorerhitzen des zu reinigenden Kunststoffs durch Einbringen von heißem Wasser in der Eintragseinrichtung und eine Abkühlung im Arbeitsspalt durch Einbringen von kaltem Wasser in den Arbeitsspalt, um die Reinigungseffizienz weiter zu verbessern.

Der Feststoffanteil aus zu reinigendem Kunststoff in dem Arbeitsspalt im Verhältnis zu dem im Arbeitsspalt befindlichen Wasser kann nach einer weiteren Ausgestaltung mindestens 5 Gew. %, vorzugsweise mindestens 10 Gew. %, weiter vorzugsweise mehr als 10 Gew. %, betragen. Beispielsweise bei einem Gesamtgewicht der Suspension in dem Arbeitsspalt von 100 kg sind bei dieser Ausgestaltung also mindestens 5 kg, vorzugsweise mindestens 10 kg, weiter vorzugsweise mehr als 10 kg, Feststoffanteil aus zu reinigendem Kunststoff (also Kunststoff mit daran noch anhaftenden Verunreinigungen) vorgesehen. Es sind entsprechend maximal 95 kg, vorzugsweise maximal 90 kg, weiter vorzugsweise weniger als 90 kg Wasser vorgesehen. Bei dieser Ausgestaltung wird also ein mittlerer bis Hochkonsistenzbetrieb im Arbeitsspalt verwirklicht.

Nach einer weiteren Ausgestaltung kann mittels der Wasserpumpe durch das Auslassrohr eine solche Menge Wasser gepumpt werden, dass der Feststoffanteil aus gereinigtem Kunststoff und in dem Arbeitsspalt abgeriebenen Verunreinigungen, wie Zellstoff und anderen anhaftenden Stoffen, in dem Auslassrohr im Verhältnis zu dem im Auslassrohr befindlichen Wasser 3 Gew. % oder weniger beträgt. Beispielsweise bei einem Gesamtgewicht der Suspension im Auslassrohr von 100 kg ist bei dieser Ausgestaltung also ein Feststoffanteil aus gereinigtem Kunststoff und den von dem Kunststoff abgeriebenen Verunreinigungen (Zellstoffe und andere anhaftende Stoffe) von maximal 3 kg vorgesehen. Entsprechend ist ein Wasseranteil von mindestens 97 kg vorgesehen. Es wird somit im Auslass ein Niederkonsistenzbetrieb realisiert.

Das erfindungsgemäße Verfahren kann mit der erfindungsgemäßen Vorrichtung durchgeführt werden. Entsprechend ist die erfindungsgemäße Vorrichtung zur Durchführung des erfindungsgemäßen Verfahrens geeignet.

Ein Ausführungsbeispiel der Erfindung wird nachfolgend anhand von Figuren näher erläutert. Es zeigen schematisch:
- Fig. 1: einen Teil einer erfindungsgemäßen Vorrichtung zum Reinigen von Kunststoff in einer perspektivischen Ansicht,
- Fig. 2: die Darstellung aus Fig. 1 in einer Ansicht von vorne, und

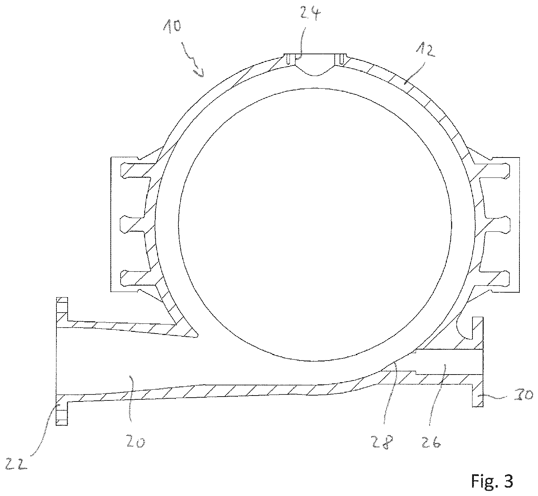

- Fig. 3: einen Vertikalschnitt durch die in Fig. 1 gezeigte Darstellung.

Soweit nichts anderes angegeben ist, bezeichnen in den Figuren gleiche Bezugszeichen gleiche Gegenstände. Die erfindungsgemäße Vorrichtung zum Reinigen von Kunststoff, insbesondere von Kunststoffschnipseln im Zuge von Kunststoffrecycling umfasst in dem dargestellten Beispiel einen Scheibenrefiner 10 mit einem Gehäuse 12 und einer ersten Refinerscheibe 14, die in dem Gehäuse um ihre Achse drehbar gelagert und mittels eines nicht näher dargestellten Drehantriebs drehend angetrieben ist (Rotor). Die Refinerscheibe 14 besitzt eine kreisringförmige Arbeitsfläche, auf der in dem gezeigten Beispiel eine Vielzahl von Zähnen 16 ausgebildet ist. Der Scheibenrefiner besitzt darüber hinaus eine zweite Refinerscheibe, die in den Figuren aus Gründen der Veranschaulichung nicht dargestellt ist. Sie besitzt eine der kreisringförmigen Arbeitsfläche der ersten Refinerscheibe 14 entsprechende Arbeitsfläche, die der Arbeitsfläche der ersten Refinerscheibe 14 im eingebauten Zustand zugewandt ist. Zwischen sich begrenzen die Arbeitsflächen entsprechend einen kreisringförmigen Arbeitsspalt. Die Arbeitsfläche der zweiten Refinerscheibe kann identisch ausgebildet sein zu der Arbeitsfläche der ersten Refinerscheibe. Die zweite Refinerscheibe kann fest in dem Gehäuse 12 angeordnet sein (Stator). Es handelt sich vorliegend also um einen Scheibenrefiner, der mit Zahnscheiben als Refinerwerkzeuge ausgerüstet ist. Obgleich nachfolgend die Erfindung anhand eines Scheibenrefiners erläutert wird, ist eine Anwendung auch bei anderen Refinern möglich, beispielsweise Kegelrefinern oder Trommelrefinern.

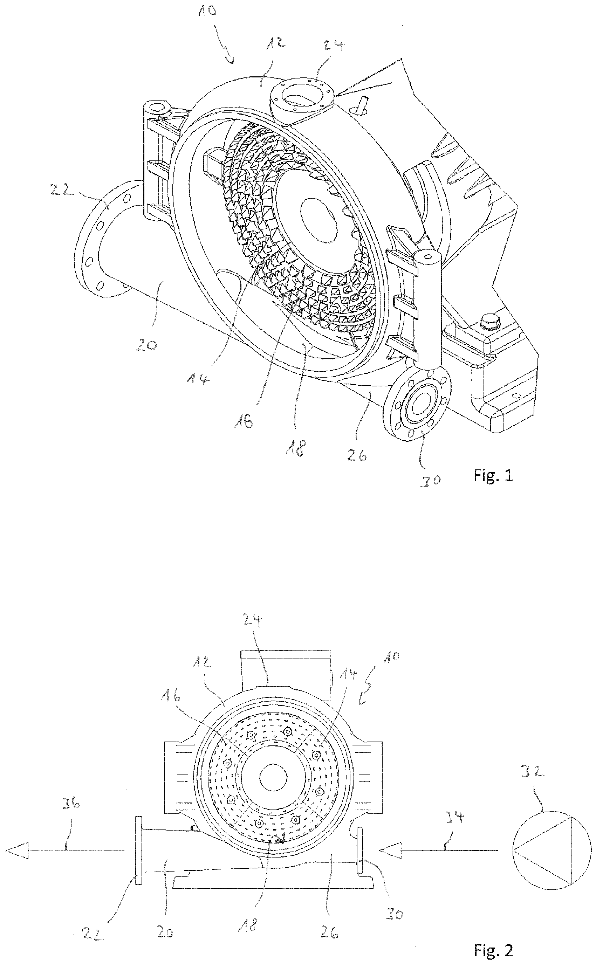

Der Scheibenrefiner 10 besitzt darüber hinaus einen in dem dargestellten Beispiel zentral und in Richtung der Drehachse der drehend angetriebenen Refinerscheibe 14 in den Arbeitsspalt mündenden Einlass, der in den Figuren nicht näher gezeigt ist. Mit dem Einlass verbunden ist eine Eintragseinrichtung zum Eintragen des zu reinigenden Kunststoffs beispielsweise zusammen mit Wasser, beispielsweise eine Förderschnecke. Der Eintrag erfolgt in dem gezeigten Beispiel in Fig. 2 in die Zeichenebene hinein. Darüber hinaus ist in Fig. 1 bei dem Bezugszeichen 18 eine an der Unterseite seitlich zu dem Arbeitsspalt vorgesehene Auslassöffnung zu erkennen, über die in dem Arbeitsspalt gereinigter Kunststoff in ein sich in Bezug auf den Arbeitsspalt tangential an die Auslassöffnung 18 anschließendes Auslassrohr 20 gefördert werden kann. Über einen Flansch 22 ist das Auslassrohr 20 direkt oder über ein weiteres Rohr mit einer Trenneinrichtung (nicht gezeigt) verbunden, in der der gereinigte Kunststoff von den in dem Arbeitsspalt abgeriebenen Zellstoffen und anderen anhaftenden Stoffen getrennt wird. Es sei noch darauf hingewiesen, dass der in den Figuren gezeigte weitere Einlass 24 in den Arbeitsspalt optional vorgesehen ist und beispielsweise verschlossen werden kann.

An dem dem Flansch 22 bzw. der Trenneinrichtung abgewandten Ende des Auslassrohrs 20 ist in dem gezeigten Beispiel ein Düsenrohr 26 über eine Wassereinlassöffnung 28 mit dem Gehäuse 12 und dem Auslassrohr 20 verbunden. Über einen Flansch 30 kann das Düsenrohr 26 direkt oder über ein weiteres Rohr mit einer in Fig. 2 gezeigten Wasserpumpe 32, beispielsweise einer Kreiselpumpe, verbunden werden.

Im Betrieb der erfindungsgemäßen Vorrichtung wird über die Eintragseinrichtung eine Suspension aus Wasser und zu reinigendem Kunststoff, beispielsweise zu reinigenden Kunststoffschnipseln, durch den Einlass in den Arbeitsspalt des Scheibenrefiners 10 eingetragen. Die erste Refinerscheibe 14 wird drehend angetrieben und der zu reinigende Kunststoff wird zwischen den Arbeitsflächen der beiden Refinerscheiben gereinigt. Insbesondere werden durch die Zähne 16 Zellstoffe und andere anhaftende Stoffe von der Oberfläche des Kunststoffs abgerieben. Dabei ist ein mittlerer bis Hochkonsistenzbetrieb möglich, das heißt der Feststoffanteil aus zu reinigenden Kunststoff kann im Verhältnis zu dem Wasser im Arbeitsspalt beispielsweise 10 Gew. % oder mehr betragen. Es ist dabei auch möglich, über eine geeignete Wasserzuführeinrichtung Wasser direkt in den Arbeitsspalt zuzuführen, so dass die Reinigungskonsistenz im Arbeitsspalt gegenüber der Eintragskonsistenz in der Eintragseinrichtung verändert werden kann. Auch ist es möglich, durch gezielte Temperierung des im Arbeitsspalt zugeführten Wassers den Prozess in geeigneter Weise zu beeinflussen.

Der in dem Arbeitsspalt gereinigte Kunststoff gelangt aufgrund von Fliehkraft zusammen mit dem abgerieben Zellstoff und anderen abgeriebenen Stoffen und dem Wasser über die Auslassöffnung 18 in das Auslassrohr 20. Gleichzeitig wird im Betrieb durch die in Fig. 2 gezeigte Wasserpumpe 32 durch das Düsenrohr 26 in Förderrichtung der aus dem Arbeitsspalt austretenden Suspension zu der Trenneinrichtung ein gerichteter Wasserstrahl durch die Wassereinlassöffnung 26 in das Auslassrohr 20 eingebracht, wie in Fig. 2 bei dem Bezugszeichen 34 veranschaulicht. Der gerichtete Wasserstrahl verläuft somit ebenso wie das Auslassrohr 20 tangential zu dem Arbeitsspalt. Der Wasserstrahl transportiert das in dem Auslassrohr 20 befindliche Gemisch aus Wasser, gereinigtem Kunststoff und abgeriebenen Verunreinigungen weiter zu der Trenneinrichtung, wie in Fig. 2 bei dem Bezugszeichen 36 veranschaulicht. Dabei übt der Wasserstrahl nach dem Prinzip einer Wasserstrahlpumpe eine Sogwirkung auf den Arbeitsspalt aus derart, dass die Suspension aus gereinigtem Kunststoff, abgeriebenen Verunreinigungen und Wasser aus dem Arbeitsspalt in das Auslassrohr 20 gesaugt wird. Gleichzeitig wird durch den Wasserstrahl die Austragskonsistenz, also die Konsistenz in dem Auslassrohr 20, in geeigneter Weise eingestellt. Beispielsweise kann der Feststoffanteil aus gereinigtem Kunststoff und abgeriebenen Verunreinigungen in dem Auslassrohr 20 im Verhältnis zu dem vorhandenen Wasser 3 Gew. % oder weniger betragen. Auch ist es möglich, durch geeignete Temperierung des Wasserstrahls auch im Bereich des Auslasses den Prozess gezielt zu beeinflussen. Neben der Wasserpumpe 32 und der Förderschnecke für den Eintrag ist dabei keine weitere Fördereinrichtung, beispielsweise eine Feststoffpumpe, erforderlich. Auch ein Pumpensumpf ist nicht erforderlich.

Mit der erfindungsgemäßen Vorrichtung bzw. dem erfindungsgemäßen Verfahren ist somit ein hydrodynamischer Betrieb möglich mit hoher Reinigungskonsistenz bei gleichzeitig niedriger Austragskonsistenz.

## Patentansprüche

1. Vorrichtung zum Reinigen von Kunststoff, insbesondere von Kunststoffschnipseln, im Zuge von Kunststoffrecycling, umfassend einen Refiner (10) mit zwei einander zugewandten Refinerwerkzeugen, von denen mindestens eines drehend angetrieben ist, und die zwischen sich einen Arbeitsspalt zum Abreiben von Zellstoff und anderen anhaftenden Stoffen von dem Kunststoff begrenzen, wobei der Refiner (10) einen in den Arbeitsspalt mündenden Einlass aufweist, weiter umfassend eine mit dem Einlass verbundene Eintragseinrichtung zum Eintragen des zu reinigenden Kunststoffs in den Einlass, und wobei der Refiner (10) einen ebenfalls mit dem Arbeitsspalt verbundenen Auslass aufweist, durch den der in dem Arbeitsspalt gereinigte Kunststoff zusammen mit den abgeriebenen Zellstoffen und anderen anhaftenden Stoffen zu einem Ausgang abgeführt wird, wobei der Auslass ein mit dem Arbeitsspalt verbundenes und zu dem Ausgang führendes Auslassrohr (20) umfasst, wobei das Auslassrohr (20) mit einer Wasserpumpe (32) zum Pumpen von Wasser durch das Auslassrohr (20) verbunden ist, **dadurch gekennzeichnet, dass** im Betrieb das mittels der Wasserpumpe (32) durch das Auslassrohr (20) gepumpte Wasser als seitlich an dem Arbeitsspalt vorbeiströmender und zu dem Arbeitsspalt tangentialer Wasserstrahl ausgebildet ist und einen Unterdruck erzeugt, der eine Sogwirkung auf den Arbeitsspalt ausübt derart, dass gereinigter Kunststoff aus dem Arbeitsspalt in das Auslassrohr (20) gefördert wird, und das mittels der Wasserpumpe (32) durch das Auslassrohr (20) gepumpte Wasser in dem Auslassrohr (20) befindlichen Kunststoff zu dem Ausgang fördert.

2. Vorrichtung nach Anspruch 1, **dadurch gekennzeichnet, dass** sich das Auslassrohr (20) in Richtung von dem Arbeitsspalt zu dem Ausgang in seinem Querschnitt erweitert.

3. Vorrichtung nach einem der vorhergehenden Ansprüche, **dadurch gekennzeichnet, dass** in oder an dem Auslassrohr (20) eine Düse (26) angeordnet ist, oder dass das Auslassrohr (20) selbst als Düse wirkt, wobei die Düsenwirkung einen gerichteten Wasserstrahl in dem Auslassrohr (20) erzeugt.

4. Vorrichtung nach Anspruch 3, **dadurch gekennzeichnet, dass** an einem mit der Wasserpumpe (32) verbundenen Ende des Auslassrohrs (20) ein als Düse wirkendes Düsenrohr in das Auslassrohr (20) eingesetzt ist.

5. Vorrichtung nach einem der vorhergehenden Ansprüche, **dadurch gekennzeichnet, dass** die Eintragseinrichtung eine Förderschnecke umfasst und/oder dass die Eintragseinrichtung eine Wasserzuführeinrichtung umfasst, durch die Wasser direkt in die Eintragseinrichtung zugeführt werden kann und/oder dass dem Arbeitsspalt des Refiners (10) eine Wasserzuführeinrichtung zugeordnet ist, durch die Wasser direkt in den Arbeitsspalt des Refiners (10) zugeführt werden kann.

6. Vorrichtung nach einem der vorhergehenden Ansprüche, **dadurch gekennzeichnet, dass** neben der Wasserpumpe (32) keine weitere Pumpe zum Fördern des Kunststoffs vorgesehen ist und/oder dass die Vorrichtung keinen Pumpensumpf aufweist.

7. Verfahren zum Reinigen von Kunststoff, insbesondere von Kunststoffschnipseln, im Zuge von Kunststoffrecycling in einem Refiner (10) mit zwei einander zugewandten Refinerwerkzeugen, von denen mindestens eines drehend angetrieben wird, und die zwischen sich einen Arbeitsspalt begrenzen, wobei der zu reinigende Kunststoff in den Arbeitsspalt eingetragen wird, in dem Arbeitsspalt Zellstoff und andere anhaftende Stoffe von dem Kunststoff abgerieben werden, und der gereinigte Kunststoff zusammen mit den abgeriebenen Zellstoffen und anderen anhaftenden Stoffen anschließend über einen Auslass aus dem Arbeitsspalt zu einem Ausgang abgeführt wird , **dadurch gekennzeichnet, dass** mittels einer Wasserpumpe (32) Wasser durch ein mit dem Arbeitsspalt verbundenes und zu dem Ausgang führendes Auslassrohr (20) gepumpt wird, wobei das durch das Auslassrohr (20) gepumpte Wasser eine Sogwirkung auf den Arbeitsspalt ausübt derart, dass gereinigter Kunststoff aus dem Arbeitsspalt in das Auslassrohr (20) gefördert wird und mit dem durch das Auslassrohr (20) gepumpten Wasser zu dem Ausgang gefördert wird.

8. Verfahren nach Anspruch 7, **dadurch gekennzeichnet, dass** dem Kunststoff im Zuge des Eintrags in den Arbeitsspalt und vor Eintritt in den Arbeitsspalt direkt Wasser zugeführt wird.

9. Verfahren nach Anspruch 8, **dadurch gekennzeichnet, dass** das durch das Auslassrohr (20) gepumpte Wasser und das dem Kunststoff im Zuge des Eintrags in den Arbeitsspalt und vor Eintritt in den Arbeitsspalt direkt zugeführte Wasser, Wasser unterschiedlicher Temperatur ist.

10. Verfahren nach einem der Ansprüche 7 bis 9, **dadurch gekennzeichnet, dass** dem Arbeitsspalt des Refiners (10) während des Reinigens des Kunststoffs in dem Arbeitsspalt direkt Wasser zugeführt wird.

11. Verfahren nach Anspruch 10, **dadurch gekennzeichnet, dass** das dem Arbeitsspalt des Refiners (10) während des Reinigens des Kunststoffs in dem Arbeitsspalt direkt zugeführte Wasser und das durch das Auslassrohr (20) gepumpte Wasser, Wasser unterschiedlicher Temperatur ist.

12. Verfahren nach einem der Ansprüche 10 oder 11, **dadurch gekennzeichnet, dass** das dem Kunststoff im Zuge des Eintrags in den Arbeitsspalt und vor Eintritt in den Arbeitsspalt direkt zugeführte Wasser und das dem Arbeitsspalt des Refiners (10) während des Reinigens des Kunststoffs in dem Arbeitsspalt direkt zugeführte Wasser, Wasser unterschiedlicher Temperatur ist.

13. Verfahren nach einem der Ansprüche 7 bis 12, **dadurch gekennzeichnet, dass** der Feststoffanteil aus zu reinigendem Kunststoff in dem Arbeitsspalt im Verhältnis zu dem im Arbeitsspalt befindlichen Wasser mindestens 5 Gewichtsprozent, vorzugsweise mindestens 10 Gewichtsprozent, beträgt.

14. Verfahren nach einem der Ansprüche 7 bis 13, **dadurch gekennzeichnet, dass** durch das Auslassrohr (20) eine solche Menge Wasser gepumpt wird, dass der Feststoffanteil aus gereinigtem Kunststoff und in dem Arbeitsspalt abgeriebenem Zellstoff und abgeriebenen anderen Stoffen in dem Auslassrohr (20) im Verhältnis zu dem im Auslassrohr (20) befindlichen Wasser 3 Gewichtsprozent oder weniger beträgt.

15. Verfahren nach einem der Ansprüche 7 bis 14, **dadurch gekennzeichnet, dass** es mit einer Vorrichtung nach einem der Ansprüche 1 bis 6 durchgeführt wird.

## Claims

1. A device for cleaning plastic, in particular scrap pieces of plastic, in the course of plastic recycling, comprising a refiner (10) having two mutually facing refiner tools, at least one of which is rotationally driven, which refiner tools delimit, between them, a working gap, for rubbing off cellulose and other adhering materials from the plastic, wherein the refiner (10) has an inlet which opens into the working gap; and further comprising a feeding apparatus connected to the inlet, for feeding the plastic which is to be cleaned into the inlet, and wherein the refiner (10) also has an outlet which is also connected to the working gap, through which outlet the plastic cleaned in the working gap, along with the cellulose and other adhering materials which have been rubbed off, are delivered to an exit; wherein the outlet comprises an outlet conduit (20) which is connected to the working gap and leads to the exit, which outlet conduit (20) is connected to a water pump (32) for pumping water through the outlet conduit (2); **characterized in that**,
during operation, the water pumped by the water pump (32) through the outlet conduit (20) is in the form of a water stream which flows laterally past the working gap, tangentially to said working gap, and produces an underpressure which has a suction effect on the working gap, such that cleaned plastic is transported out of the working gap and into the outlet conduit (20), and the water pumped by the water pump (32) through the outlet conduit (20) transports the plastic located in the outlet conduit (20) to the exit.

2. The device according to claim 1; **characterized in that** the cross section of the outlet conduit (20) increases with progression in the direction from the working gap to the exit.

3. The device according to one of the preceding claims; **characterized in that** a nozzle (26) is disposed in or on the outlet conduit (20), or else the outlet conduit (20) itself serves as a nozzle, wherein effect of the nozzle is to produce a directed water stream in the outlet conduit (20).

4. The device according to claim 3; **characterized in that** a nozzle tube serving as a nozzle is disposed on an end of the outlet conduit (20) which end is connected to the water pump (32).

5. The device according to one of the preceding claims; **characterized in that** the feeding device is comprised of a conveying screw, and/or is comprised of a water feed apparatus through which water can be introduced directly into the feeding apparatus; and/or in that a water introduction apparatus is associated with the working gap of the refiner (10), through which water introduction apparatus water can be introduced directly into the working gap of the refiner (10).

6. The device according to one of the preceding claims; **characterized in that** no other pump for conveying the plastic is provided other than the water pump (32); and/or **in that** the device does not have a pump sump.

7. A method for cleaning plastic, in particular scrap pieces of plastic, in the course of plastic recycling, in a refiner (10) with two refining tools facing each other, of which at least one refining tool is driven in rotation, and which refining tools delimit a working gap between them, in which working gap cellulose and other adhering materials are rubbed off of the plastic, and the cleaned plastic together with the rubbed-off cellulose and other adhering materials are then delivered via an outlet from the working gap to an exit; **characterized in that** water is pumped by means of a water pump (32) through an outlet conduit (20) connected to the working gap and leading to the exit, wherein the water pumped through the outlet conduit (20) exerts a suction effect on the working gap such that cleaned plastic is conveyed from the working gap into the outlet conduit (20), and is conveyed to the exit by means of the water pumped through the outlet conduit (20).

8. The method according to claim 7; **characterized in that** water is directly introduced to the plastic in the course of entry into the working gap and prior to entry into the working gap.

9. The method according to claim 8; **characterized in that** the water pumped through the outlet conduit (20) is of a different temperature than the water introduced to the plastic in the course of entry into the working gap and prior to entry into the working gap.

10. The method according to one of claims 7 to 9; **characterized in that** water is directly introduced into the working gap of the refiner (10) during the cleaning of the plastic in the working gap.

11. The method according to claim 10; **characterized in that** the water introduced directly into the working gap of the refiner (1) during the cleaning of the plastic in the working gap is of a different temperature than the water pumped through the outlet conduit (20).

12. The method according to claim 10 or 11; **characterized in that** the water directly introduced [accompanying] the plastic in the course of being fed into the working gap and prior to entry into the working gap is of a different temperature than the water introduced directly into the working gap during the cleaning of the plastic.

13. The method according to one of claims 7 to 12; **characterized in that** the proportion of solids comprised of plastic to be cleaned, in the working gap, in relation to the water present in the working gap, is at least 5 weight percent, preferably at least 10 weight percent.

14. The method according to one of claims 7 to 13; **characterized in that** such an amount of water is pumped through the outlet conduit (20) that the proportion of solids comprised of cleaned plastic, plus cellulose and other materials rubbed off, in the outlet conduit (20), in relation to the water present in the outlet conduit (20), is 3 weight percent or less.

15. The method according to one of claims 7 to 14; **characterized in that** it is carried out with a device according to one of claims 1 to 6.

## Revendications

1. Dispositif pour le nettoyage de plastique, en particulier de copeaux de plastique, pendant le recyclage de plastique, comportant un raffineur (10) avec deux outils de raffinage tournés l'un vers l'autre, dont l'un au moins est entraîné de façon rotative, et lesquels délimitent entre eux un interstice de travail pour le râpage de cellulose et d'autres matières adhérentes sur du plastique, dans lequel le raffineur (10) présente une entrée débouchant sur l'interstice de travail, comportant en outre un dispositif d'introduction relié à l'entrée pour l'introduction du plastique à nettoyer dans l'entrée, et dans lequel le raffineur (10) présente une évacuation également reliée à l'interstice de travail, par laquelle le plastique nettoyé dans l'interstice de travail est évacué vers une sortie ensemble avec les celluloses râpées et les autres matières adhérentes,
dans lequel l'évacuation comporte un conduit d'évacuation (20) relié à l'interstice de travail et menant à la sortie, le conduit d'évacuation (20) étant relié à une pompe à eau (32) pour pomper de l'eau à travers le conduit d'évacuation (20), **caractérisé en ce que**
pendant le fonctionnement, l'eau pompée à travers le conduit d'évacuation (20) au moyen de la pompe à eau (32) se présente sous la forme d'un jet d'eau tangentiel à l'interstice de travail et s'écoulant latéralement devant l'interstice de travail et produit une pression négative exerçant une action de succion sur l'interstice de travail, de telle façon que du plastique nettoyé est transporté de l'interstice de travail vers le conduit d'évacuation (20), et l'eau pompée à travers le conduit d'évacuation (20) au moyen de la pompe à eau (32) transporte du plastique situé dans le conduit d'évacuation (20) vers la sortie.

2. Dispositif selon la revendication 1, **caractérisé en ce que** le conduit d'évacuation (20) s'élargit dans sa section transversale dans la direction allant de l'interstice de travail vers la sortie.

3. Dispositif selon l'une des revendications précédentes, **caractérisé en ce qu'**une buse (26) est disposée dans ou sur le conduit d'évacuation (20), ou **en ce que** le conduit d'évacuation (20) sert lui-même de buse, l'action de buse produisant un jet d'eau orienté dans le conduit d'évacuation (20).

4. Dispositif selon la revendication 3, **caractérisé en ce qu'**un conduit de buse servant de buse est inséré dans le conduit d'évacuation (20) à une extrémité du conduit d'évacuation (20) reliée à la pompe à eau (32).

5. Dispositif selon l'une des revendications précédentes, **caractérisé en ce que** le dispositif d'introduction comporte une vis transporteuse et/ou **en ce que** le dispositif d'introduction comporte un dispositif d'alimentation en eau permettant d'alimenter de l'eau directement dans le dispositif d'introduction et/ou **en ce qu'**un dispositif d'alimentation en eau permettant d'alimenter de l'eau directement dans l'interstice de travail du raffineur (10) est attribué à l'interstice de travail du raffineur (10).

6. Dispositif selon l'une des revendications précédentes, **caractérisé en ce qu'**aucune pompe supplémentaire n'est prévue en dehors de la pompe à eau (32) pour le transport du plastique et/ou **en ce que** le dispositif ne présente pas de puisard de pompe.

7. Procédé pour le nettoyage de plastique, en particulier de copeaux de plastique, pendant le recyclage de plastique dans un raffineur (10), avec deux outils de raffinage tournés l'un vers l'autre, dont l'un au moins est entraîné de façon rotative, et lesquels délimitent entre eux un interstice de travail, dans lequel le plastique à nettoyer est introduit dans l'interstice de travail, de la cellulose et d'autres matières adhérentes sont râpées dans l'interstice de travail, et le plastique nettoyé est ensuite évacué de l'interstice de travail par le biais d'une évacuation vers une sortie ensemble avec les celluloses râpées et les autres matières adhérentes,
**caractérisé en ce que** de l'eau est pompée au moyen d'une pompe à eau (32) à travers un conduit d'évacuation (20) relié à l'interstice de travail et menant vers la sortie, moyennant quoi l'eau pompée à travers le conduit d'évacuation (20) exerce une action de succion sur l'interstice de travail, de telle façon que du plastique nettoyé est transporté hors de l'interstice de travail dans le conduit d'évacuation (20) et transporté vers la sortie avec l'eau pompée à travers le conduit d'évacuation (20).

8. Procédé selon la revendication 7, **caractérisé en ce que** de l'eau est alimentée directement vers le plastique pendant l'introduction dans l'interstice de travail et avant l'entrée dans l'interstice de travail.

9. Procédé selon la revendication 8, **caractérisé en ce que** l'eau pompée à travers le conduit d'évacuation (20) et l'eau alimentée directement vers le plastique pendant l'introduction dans l'interstice de travail et avant l'entrée dans l'interstice de travail est de l'eau à température différente.

10. Procédé selon l'une des revendications 7 à 9, **caractérisé en ce que** de l'eau est alimentée directement vers l'interstice de travail du raffineur (10) pendant le nettoyage du plastique dans l'interstice de travail.

11. Procédé selon la revendication 10, **caractérisé en ce que** l'eau alimentée directement vers l'interstice de travail du raffineur (10) pendant le nettoyage du plastique dans l'interstice de travail et l'eau pompée à travers le conduit d'évacuation (20) est de l'eau à température différente.

12. Procédé selon l'une des revendications 10 ou 11, **caractérisé en ce que** l'eau alimentée directement vers le plastique pendant l'introduction dans l'interstice de travail et avant l'entrée dans l'interstice de travail et l'eau alimentée directement vers l'interstice de travail du raffineur (10) pendant le nettoyage du plastique dans l'interstice de travail est de l'eau à température différente.

13. Procédé selon l'une des revendications 7 à 12, **caractérisé en ce que** la part de matières solides venant du plastique à nettoyer dans l'interstice de travail représente au moins 5 pourcent en poids, de préférence au moins 10 pourcent en poids, par rapport à l'eau présente dans l'interstice de travail.

14. Procédé selon l'une des revendications 7 à 13, **caractérisé en ce qu'**une telle quantité d'eau est pompée à travers le conduit d'évacuation (20), que la part de matières solides venant du plastique nettoyé et de la cellulose râpée dans l'interstice de travail et des autres matières râpées dans le conduit d'évacuation (20) représente 3 pourcent en poids ou moins par rapport à l'eau présente dans le conduit d'évacuation (20).

15. Procédé selon l'une des revendications 7 à 14, **caractérisé en ce que** celui-ci est mis en oeuvre à l'aide d'un dispositif selon l'une des revendications 1 à 6.
